# DEMANDE DE BREVET EUROPEEN

(11) **EP 1 719 654 A1**
(43) Date de publication de la demande: **08.11.2006**
(21) Numéro de dépôt: 06350004.5
(22) Date de dépôt: 15.03.2006
(51) Int. Cl.: B60J 7/20, B60J 7/14

(54) **Véhicule du type coupé convertible à toit rigide avec custodes**

(30) Priorité: 04.05.2005 FR 0504529
(71) Demandeur: Heuliez, 79140 Cerizay (FR)
(72) Inventeur: Quéveau, Gérard, 79140 Le Pin (FR); Quéveau, Paul, 79140 Montravers (FR); Guillez, Jean Marc, 79140 Cirières (FR)
(74) Mandataire: Tournel, Jean Louis

(57) **Abrégé**

L'invention se rapporte à un véhicule comportant un toit mobile comprenant un élément (2) de toit avant rigide et des éléments (3A,3B) latéraux de toit arrière rigides situés de part et d'autre d'un deuxième élément (4) de toit arrière central rigide, ceci au moins dans un état déployé de tous ces éléments de toit et un état plié dans lequel ces éléments de toit sont disposés dans un coffre (6) arrière du véhicule ce coffre arrière étant fermé par un capot (60) articulé à la caisse par un jeu d'articulations (41A, 41B) libérables de sorte à autoriser l'ouverture du capot de l'avant vers l'arrière du véhicule pour ranger le toit et l'ouverture du capot de l'arrière vers l'avant pour accéder aux bagages, les éléments latéraux (3A,3B) de toit arrière formant des custodes (3A, 3B).

## Description

L'invention se rapporte à un véhicule du type coupé convertible à toit rigide rétractable.

Les véhicules cabriolets sont très prisés. Il existe différents types de toits sur ces véhicules. Les toits souples ont l'avantage de pouvoir se replier dans un faible encombrement.

Les toits rigides sont plus encombrants mais offrent plus de résistance dans le temps.

On connaît de nombreux toits mobiles constitués d'éléments rigides permettant de transformer un véhicule du type coupé en un véhicule du type cabriolet.

Un but de la présente invention est de proposer un véhicule à toit rigide rétractable qui soit à la fois simple et de structure ayant une bonne résistance et pouvant accueillir deux rangées de sièges dans un habitacle assez vaste.

Dans ces conditions, suivant l'invention, une solution proposée consiste dans un véhicule comportant un toit mobile présentant un avant, un arrière comprenant un élément de toit avant rigide et des éléments latéraux de toit arrière rigides situés de part et d'autre d'un deuxième élément de toit arrière central rigide, ceci au moins dans un état déployé de tous ces éléments de toit, l'élément avant de toit étant articulé au premier élément arrière de toit suivant un premier axe transversal et ce premier élément arrière de toit étant articulé à la caisse du véhicule suivant un deuxième axe transversal avec les éléments latéraux, ces derniers étant reliés par des articulations au toit avant et à la carrosserie, lesquels éléments sont mobiles entre ledit état déployé dans lequel ils s'étendent au-dessus de l'habitacle du véhicule et un état plié dans lequel ces éléments de toit sont disposés dans un coffre arrière du véhicule, ce coffre arrière étant fermé par un capot articulé à la caisse par un jeu d'articulations libérables de sorte à autoriser l'ouverture du capot de l'avant vers l'arrière du véhicule pour ranger le toit et l'ouverture du capot de l'arrière vers l'avant pour accéder aux bagages, les éléments latéraux de toit arrière formant des custodes.

D'autres particularités et avantages de l'invention pourront encore apparaître dans la description ci-après ou les dessins annexés, donnés à titre d'exemples non limitatifs, sont tels que:
- la figure 1 montre en perspective un véhicule convertible selon l'invention pourvu d'un toit mobile,
- la figure 2 est une coupe du toit de la figure 1, dans son état fermé au-dessus de l'habitacle et dans son état plié, à droite,

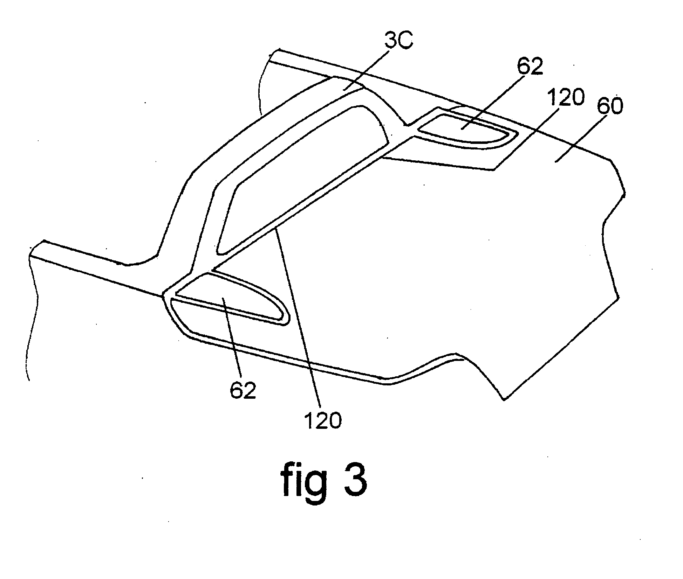

- la figure 3 montre en perspective de trois-quart arrière un véhicule convertible pourvu du toit mobile selon l'invention .

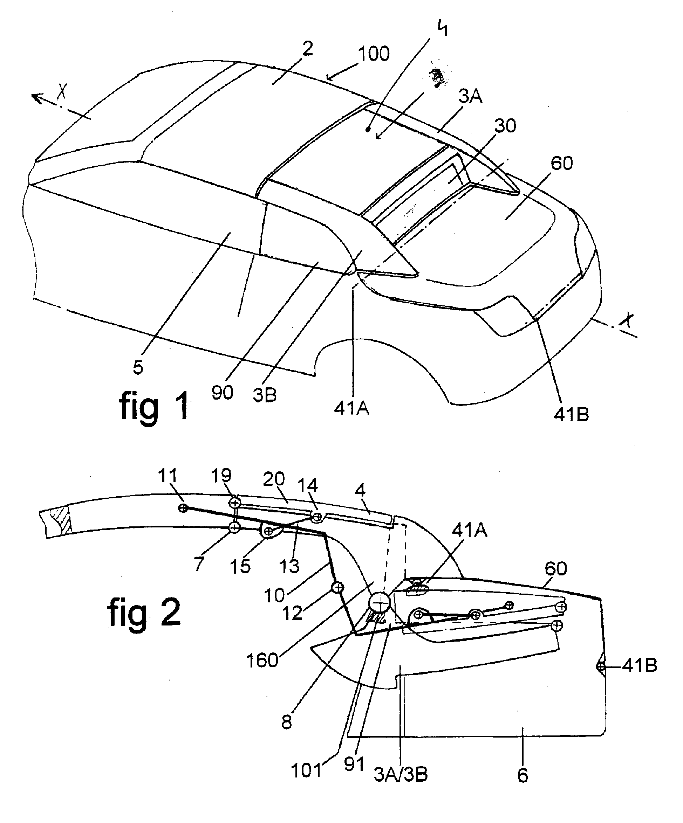

En se reportant aux figures et en particulier aux figures 1 et 2, le toit mobile 100, ici escamotable, du véhicule 1 comprend un élément de toit avant rigide 2 et un élément de toit arrière rigide 3.

L'élément arrière de toit 3 comprend un élément ou panneau central rigide 4 de toit arrière et deux éléments latéraux de toit rigides 3A,3B. Dans l'état fermé du toit, tous les éléments de toit 2,3A,3B sont déployés au dessus de cet habitacle 5, comme sur la fig.1.

Un élément transversal arrière fixe, par rapport à la caisse, ou cloison 3C comprend éventuellement une lunette arrière 30.

Cette cloison 3C se situe derrière les sièges au niveau de la tête des occupants du véhicule. Elle s'étend entre la caisse et l'arrière de la partie arrière du toit rigide.

Dans une forme de réalisation, la cloison fait partie de la structure de caisse et se présente sous la forme d'un arceau sur lequel est fixé une lunette.

Ces éléments de toit avant et arrière 2, 3 sont mobiles entre une position dans laquelle ils s'étendent au dessus de l'habitacle 5 du véhicule 1 et une position pliée dans laquelle ces éléments 2, 3 sont ici repliés l'un sur l'autre dans le coffre arrière 6 du véhicule, sous le capot 60 de fermeture de ce coffre.

Comme on peut le voir, les éléments latéraux 3A, 3B forment des custodes qui se développe à l'arrière de la cloison 3C.

Le capot 60 est complété par une partie latérale extérieure comprenant deux volets dits latéraux 62 disposés de part et d'autre de la partie centrale du capot.

Ces volets latéraux 62 forment des clapets masquant des évidements ou des échancrures lorsque le toit est rangé.

Les clapets 62 sont indépendants de la partie centrale, c'est à dire qu'ils ont une cinématique apte à laisser le passage des éléments latéraux et masquer les évidements sans être nécessairement en transmission directe avec le capot. Le mouvement des clapets peut être différent de celui du capot.

Ces clapets 62 permettent le passage des custodes et viennent fermer l'évidemment nécessaire au passage des custodes 3A,3B.

Le capot à localement son bord avant qui entoure ou borde les volets 62 latéraux et donc la partie de la custode lorsque celle ci est en position dépliée du toit.

Ce capot comporte donc des échancrures. Par ailleurs le bord avant 120 de ce capot est adjacent à la cloison arrière 3C.

Le capot de coffre est articulé sur la caisse par un jeu d'articulations libérables 41A, 41B de sorte à autoriser l'ouverture du capot de l'avant vers l'arrière du véhicule pour ranger le toit et l'ouverture du capot de l'arrière vers l'avant pour accéder aux bagages. Le document décrivant un exemple de jeu d'articulations libérables US-6 092 335 est incorporé par référence.

L'élément avant de toit 2 est articulé à chacun des éléments latéraux arrière de toit 3A 3B suivant deux tronçons d'axes colinéaires repéré 7, compris entre les bords adjacents des éléments 2, 3A, 3B et situé sensiblement dans le prolongement de leur surface inférieure.

Chacun de ces éléments latéraux 3A,3B arrière est par ailleurs articulé à la carrosserie ou plus exactement à la caisse 101 du véhicule suivant un deuxième axe 8 d'articulation.

Le déplacement des deux éléments de toit 2, 3 entre les deux positions précitées est commandé de chaque côté de l'axe longitudinal X par un bras pivotant 10 dont l'extrémité avant est fixée de façon articulée à l'élément avant de toit 2 suivant un troisième axe 11 situé en avant du premier axe 7.

A l'arrière le bras de commande 10 est articulé à la caisse 101 suivant un quatrième axe transversal 12 situé en avant du deuxième axe 8.

Les quatre axes précités 7, 11, 12, 8 définissent un quadrilatère déformable et sont donc transversaux à l'axe longitudinal X.

Le pivotement du bras 10 est commandé par des moyens tels qu'un vérin ou un moteur, permettant à ce bras 10 de basculer vers l'arrière suivant un angle proche de 180°, pour le pliage du toit derrière l'habitacle (voir figure 2).

Comme montré figure 2, en position de rangement dans le coffre arrière 6, l'élément avant de toit 2 s'étend sensiblement horizontalement au-dessus des éléments arrière de toit 3, 4

On remarquera que les éléments latéraux arrière 3A, 3B présentent chacun un profil latéral de forme arquée et épousent pour partie le toit en se prolongeant vers l'arrière pour obtenir une custode intégrée au toit.

Par custode on comprendra une partie latérale de la carrosserie d'une automobile à l'aplomb de la roue arrière, entre le toit et la ligne de ceinture.

Cet élément latéral formant custode est articulé à sa base 160 sur la caisse et porte donc le deuxième axe 8 transversal d'articulation du toit qui se situe à distance des deux extrémités avant et arrière de l'élément latéral 3A, 3B.

On voit que pour faciliter la rotation, l'élément latéral présente un pied 91 présentant le deuxième axe 8 d'articulation.

Ces éléments latéraux arrières reçoivent des vitres 90 latérales pouvant être escamotées dans la carrosserie notamment en position découverte

Encore figure 2, le basculement de l'élément central arrière de toit 4 est assuré, de chaque côté de l'axe longitudinal X, par un levier pivotant 13 dont une extrémité est articulée à cet élément 4, suivant un axe transversal 14 situé sous l'élément 4 et dont l'autre extrémité est montée pivotante suivant un autre axe transversal 15 solidaire du bras pivotant 10.

D'autre part, le bord avant de l'élément central arrière 4 est articulé au bord arrière de l'élément avant de toit 2, suivant un axe transversal 19.

Comme montré figure 2, on remarquera que, lorsque les éléments de toit sont pliés, l'élément de toit avant 2 reste dans la même orientation que lorsqu'il est déployé au-dessus de l'habitacle 5, c'est-à-dire que sa courbure supérieure 20 demeure bombée vers le haut. L'élément de toit 2 demeure par ailleurs dans les deux cas sensiblement à l'horizontal.

En position du toit recouvrant l'habitacle, l'ensemble formé par la cloison, les custodes et le deuxième élément de toit ferme l'arrière de l'habitacle.

Les éléments de toit latéraux arrières forment les custodes et de ce fait ils offrent une bonne résistance au toit et au véhicule.

Les articulations entre la custode et le premier élément de toit arrière confère à l'ensemble du toit une bonne stabilité lors des mouvements de rangement ou de déploiement.

Le type de toit utilisé permet de ménager une cloison restant à l'arrière de l'occupant.
Les éléments toit latéraux arrières forment les custodes: de ce fait ils offrent de une bonne résistance au toit et au véhicule. De plus les custodes portent les articulations du premier élément de toit arrière ce qui confère à l'ensemble du toit une bonne stabilité lors des mouvements de rangement et de déploiement. Le type de toit utilisé permet de ménager une cloison à l'arrière des occupants du véhicule, cette cloison restant en place quelle que soit l'état du toit (déployé ou rangé): en effet, la présence de deux éléments de toits arrière latéraux articulés à la caisse du véhicule et à l'élément de toit avant permet de conserver un évidement entre ces éléments arrière, l'évidement étant occupé par la cloison fixe qui ferme alors l'arrière de l'habitacle.
La cloison fixe peut être réalisée sous forme d'un élément de structure du véhicule qui sert alors d'élément de sécurité en cas de choc ou de retournement du véhicule.
La combinaison des éléments de toits latéraux réalisés sous forme de custode, du deuxième élément de toit arrière et de la cloison permet de réaliser un véhicule à deux rangées de sièges disposant d'un habitacle assez vaste.
Lorsque les custodes sont rangées avec le toit, l'habitacle est largement découvert, en particulier sur les côtés de la cloison, la cloison permettant de limiter les turbulences pour les occupants notamment ceux assis à l'arrière.

## Revendications

1. Véhicule comportant un toit mobile présentant un avant, un arrière comprenant un élément (2) de toit avant rigide et des éléments (3A,3B) latéraux de toit arrière rigides définissant un premier élément de toit arrière et situés de part et d'autre d'un deuxième élément (4) de toit arrière central rigide, ceci au moins dans un état déployé de tous ces éléments de toit, l'élément avant de toit étant articulé au premier élément arrière de toit suivant un premier axe transversal et ce premier élément arrière de toit étant articulé à la caisse du véhicule suivant un deuxième axe transversal, les éléments latéraux étant reliés par des articulations au toit avant et à la carrosserie, lesquels éléments sont mobiles entre ledit état déployé dans lequel ils s'étendent au-dessus de l'habitacle du véhicule et un état plié dans lequel ces éléments de toit sont disposés dans un coffre (6) arrière du véhicule ce coffre arrière étant fermé par un capot (60) articulé à la caisse par un jeu d'articulations (41A, 41B) libérables de sorte à autoriser l'ouverture du capot de l'avant vers l'arrière du véhicule pour ranger le toit et l'ouverture du capot de l'arrière vers l'avant pour accéder aux bagages, les éléments latéraux (3A,3B) de toit arrière formant des custodes (3A,3B).

2. Véhicule selon la revendication 1 **caractérisé en ce que** les custodes comportent à leurs bases le deuxième axe (8) d'articulation de l'élément de toit arrière sur la caisse.

3. Véhicule selon la revendication 2 **caractérisé en ce que** la partie située derrière les sièges est fermé par une cloison (3C) solidaire de la caisse s'étendant entre la caisse et l'arrière de la partie arrière du toit rigide..

4. Véhicule selon la revendication 3 **caractérisé en ce que** la cloison (3C) fait partie de la structure de caisse.

5. Véhicule selon la revendication 3 ou 4 **caractérisé en ce que** la cloison (3C) s'étend entre les custodes.

6. Véhicule selon l'une quelconque des revendications précédentes **caractérisé en ce que** les éléments latéraux arrière (3A, 3B) présentent chacun un profil latéral de forme arquée et reçoivent des vitres latérales (90) pouvant être escamotées dans la carrosserie notamment en position découverte.

7. Véhicule selon l'une quelconque des revendications précédentes **caractérisé en ce que** le capot à localement son bord avant présentant des échancrures qui entoure ou borde la partie de la custode lorsque celle ci est en position déployée du toit.

8. Véhicule selon la revendication 7 **caractérisé en ce que** il comporte des volets (62) formant clapets pour venir fermer les passages situés au droit des échancrures lorsque le toit est replié.

9. Véhicule selon la revendication 3 ou suivante **caractérisé en ce que** le bord avant (120) du capot est adjacent à la cloison.
